# EUROPÄISCHE PATENTSCHRIFT

(11) **EP 3 056 425 B1**
(45) Veröffentlichungstag und Bekanntmachung des Hinweises auf die Patenterteilung: **22.08.2018**
(21) Anmeldenummer: 16000077.4
(22) Anmeldetag: 14.01.2016
(51) Int. Cl.: B64C 29/00, B64C 27/30

(54) **SENKRECHTSTARTFÄHIGES FLUGGERÄT**
AIRCRAFT WHICH CAN LAUNCH VERTICALLY
AERONEF POUVANT DECOLLER A LA VERTICALE

(30) Priorität: 13.02.2015 DE 102015001704
(43) Veröffentlichungstag der Anmeldung: 17.08.2016
(73) Patentinhaber: Airbus Defence and Space GmbH, 81663 München (DE)
(72) Erfinder: Niedzballa, Hans, 83024 Rosenheim (DE)
(74) Vertreter: Krebs, Jörg

(56) Entgegenhaltungen:
- WO-A2-2006/113877
- FR-A- 966 032
- US-A- 3 260 476
- US-A1- 2013 020 429

## Beschreibung

Die vorliegende Erfindung betrifft ein senkrechtstartfähiges Fluggerät ähnlich beispielsweise einem Quadcopter.

Für viele Anwendungen ist es wünschenswert, ein Fluggerät zur Verfügung zu haben, welches von einer minimal kleinen Fläche aus starten kann und somit beispielsweise keinen speziellen großflächigen Flughafen benötigt. Ferner wird für bestimmte Einsatzzwecke ein Fluggerät benötigt, welches agil ist und präzise manövriert werden kann und welches vorzugsweise auf der Stelle schweben und dabei gute Schwebeflugeigenschaften aufweisen kann.

Beispielsweise werden Fluggeräte zur Luftüberwachung und - aufklärung.eingesetzt, welche über einem interessierenden Ziel schweben können sollen und dabei beispielsweise Luftbilder aufnehmen können sollen. In einer alternativen Anwendung kann ein senkrechtstartfähiges Fluggerät, manchmal auch als VTOL (Vertical Take-Off and Landing) bezeichnet, dazu eingesetzt werden, für Menschen oder sonstige Maschinen schwer zugängliche Gebiete anzufliegen, beispielsweise im Rahmen von Katastrophenschutzeinsätzen, um zum Beispiel Güter wie Werkzeuge, Lebensmittel oder Medikamente in solche Gebiete transportieren zu können.

Für solche Einsätze wurden unter anderem Fluggeräte entwickelt, bei denen vier oder mehr mit einem Propeller und einem diesen antreibenden Motor ausgestattete Rotoren jeweils für einen im Wesentlichen vertikal nach oben gerichteten Schub sorgen, um auf diese Weise das Fluggerät senkrecht abheben bzw. schweben lassen zu können. Ein mit vier solchen Rotoren versehenes Fluggerät wird auch als Quadcopter, Quadrocopter, Quadricopter, Quadrotor oder Schwebeplattform bezeichnet. Allgemein werden solche Fluggeräte mit mehr als drei für Auftrieb sorgenden Rotoren als Multicopter bezeichnet, wobei neben Quadcoptern auch Varianten mit drei Rotoren (Tricopter), sechs Rotoren (Hexacopter) oder acht Rotoren (Octocopter) gebräuchlich sind. Derartige Fluggeräte werden meist unbemannt betrieben und können dementsprechend klein sein. Teilweise werden diese Fluggeräte auch als Drohnen bezeichnet.

Durch leichte Neigung des gesamten Fluggeräts bzw. eines oder mehrerer Rotoren aus der Horizontalen heraus kann bei solchen Fluggeräten auch für einen gewissen Vortrieb gesorgt werden, in dem ein von den Rotoren erzeugter Schub aus der Vertikalen heraus geneigt wird. Allerdings sind auf diese Weise erreichbare Reisefluggeschwindigkeiten aufgrund von bei diesem Typ von Fluggerät auftretenden physikalischen Randbedingungen auf relativ geringe Geschwindigkeiten von typischerweise unter 200 km/h, häufig auch unter 100 km/h, begrenzt. Eine solche Geschwindigkeitsbegrenzung resultiert beispielsweise aus der physikalischen Randbedingung, dass die für den Auftrieb eingesetzten Propeller bei hohen Rotationsgeschwindigkeiten betrieben werden und daher ein sich nach vorne in Richtung der Flugrichtung des Fluggeräts bewegendes Propellerblatt sich bereits bei verhältnismäßig niedrigen Reisefluggeschwindigkeiten zumindest an seinen Propellerblattspitzen fast mit Schallgeschwindigkeit bewegen muss, wodurch hohe Luftwiderstände und starke Geräusche generiert werden.

Herkömmliche Multicopter haben daher, ähnlich wie Hubschraubern, bei denen nur ein einziger Rotor für den nötigen Auftrieb sorgt und eine komplizierte Rotormechanik zusammen mit einem Heckrotor für ein Manövrieren des Hubschraubers eingesetzt werden kann, zwar gute Schwebeflugeigenschaften, erreichen üblicherweise aber nur relativ geringe Reisefluggeschwindigkeiten.

US3260476 beschreibt ein Fluggerät mit in Längsrichtung arretierbaren Propellern.
In der KR 10 2012 006 05 90 A wird ein Quadrocopter beschrieben, der vertikal starten und landen kann und bei dem eine Schubrichtung von Propellern variiert werden kann, um auf diese Weise nicht nur für einen Auftrieb, sondern auch für einen Vortrieb für den Quadrocopter sorgen zu können. Davon ausgehend ist es Aufgabe der Erfindung, ein Fluggerät bereitzustellen, das sowohl gute Schwebeflugeigenschaften als auch hohe Reisefluggeschwindigkeiten ermöglicht.

Diese Aufgabe wird mit einem Fluggerät mit den Merkmalen des Anspruchs 1 gelöst. Beispielhafte Ausführungsformen sind in den abhängigen Ansprüchen sowie der nachfolgenden Beschreibung dargestellt.

Erfindungsgemäß wird ein Fluggerät vorgeschlagen, welches eine Tragestruktur aufweist, wobei die Tragestruktur wenigstens einen zentralen Rumpf und zwei jeweils seitlich von dem Rumpf beabstandet angeordnete Pylone aufweist. Das Fluggerät weist weiter eine Flügelstruktur, wenigstens vier Hubrotoren und wenigstens einen Schubantrieb auf. Jeder der Hubrotoren ist an der Tragestruktur befestigt, weist einen Propeller mit zwei Propellerblättern auf und ist dazu ausgebildet, durch Rotieren des Propellers eine in Vertikalrichtung wirkende Auftriebskraft für das Fluggerät zu erzeugen. Der Schubantrieb ist dazu ausgebildet, eine in Horizontalrichtung wirkende Schubkraft auf die Tragestruktur zu erzeugen. Die Pylone weisen jeweils mindestens zwei Hubrotoren auf, wobei die Hubrotoren dazu ausgebildet sind, jeweilige Propellerblätter eines Hubrotors in einer Position relativ zu dem Pylonen zu arretieren. Die Propellerblätter eines Hubrotors ragen in arretierter Stellung nicht über die Außenabmessungen des Pylonen hinaus.

Der Erfindung liegt der Gedanke zugrunde, ein Fluggerät vorzugsehen, das Hubrotoren aufweist, die einen vertikalen. Schub erzeugen, mithilfe dessen das Fluggerät vertikal starten und landen sowie schweben kann, und zusätzlich andererseits einen Schubantrieb vorzusehen, der einen in Horizontalrichtung wirkenden Schub erzeugen kann, so dass das Fluggerät unabhängig von den Hubrotoren auf eine hohe Reisefluggeschwindigkeit beschleunigt werden kann, nachdem die Rotoren abgestellt wurden. Um eine aerodynamisch optimale Form zu erreichen, sind die Propellerblätter der Hubrotoren bei abgestellten Hubrotoren derart in der Struktur des Fluggeräts, beispielsweise in Pylonen, untergebracht, so dass diese einen möglichst geringen Luftwiderstand während des Reiseflugs aufweisen.

Der Propeller des Hubrotors des Fluggeräts weist exakt zwei Propellerblätter auf. Ein solcher Propeller weist einerseits einen hohen Wirkungsgrad und andererseits geringe Unwuchten auf. Ferner ist ein solcher Propeller mit zwei Propellerblättern für das vorgeschlagene Fluggerät besonders vorteilhaft, da er während einer Reiseflugposition derart in einer Rotatiönsposition arretiert werden kann, dass sich der Propeller parallel zu der Flugrichtung erstreckt. In einer solchen Rotationsposition erzeugt der arretierte Propeller minimale Luftwiderstände.

Die Hubrotoren des Fluggeräts sind dazu ausgebildet, jeweilige Propellerblätter eines Hubrotors in einer bestimmten Rotationsposition zu arretieren. Ein solches Arretieren der Propellerblätter kann insbesondere vorteilhaft sein, wenn das Fluggerät sich mit hoher Reisefluggeschwindigkeit angetrieben durch den Schubantrieb horizontal bewegt und die Tragflächen der Flügelstruktur dabei ausreichend dynamischen Auftrieb erzeugen, so dass durch die Hubrotoren kein weiterer Auftrieb erzeugt werden braucht. In einer solchen Flugsituation ist es vorteilhaft, die Propellerblätter der Hubrotoren in einer Rotationsposition derart zu arretieren, dass sie beim Reiseflug einerseits einen möglichst geringen Luftwiderstand erzeugen und dass andererseits möglichst geringe horizontal und/oder vertikal wirkende Kräfte auf die Propellerblätter aufgrund an diesen vorbeiströmender Luftströmung erzeugt werden.

Um den Luftwiderstand der Rotorblätter beim Reiseflug weiter zu reduzieren sind die Hubrotoren in den Tragestruktur des Fluggeräts, hier in den Pylonen derart angeordnet, dass die Rotorblätter der Hubrotoren in arretierter Stellung nicht über die Außenabmessungen des Pylonen hinausragen. In arretierter Stellung bilden die Pylonen mit den Propellerblättern somit eine aerodynamisch optimierte Form. Die Propeller sind in den Pylonen derart angeordnet, dass sie wenigstens von zwei gegenüberliegenden Seiten durch den Pylon umschlossen sind. Die Pylonen sind vorzugsweise derart ausgebildet, dass die Propellerblätter in der Breite von den Pylonen aufgenommen werden können. Die Propellerblätter ragen hierbei in arretierter Stellung, d.h. die Propellerblätter sind in Längsrichtung der Pylonen ausgerichtet, vorzugsweise nicht über die Pylonen hinaus. Bevorzugt weisen die Pylone quer zur Ausdehnungsrichtung des Pylonen beidseitig offene Öffnungen auf in denen die Propeller der Hubrotoren integriert sind. Bevorzugt bilden die Öffnungen quer zur Ausdehnungsrichtung der Pylone eine durchgehende Öffnung durch den Pylon. Anders ausgedrückt weisen die Pylonen im Bereich der Hubrotoren quer zur Längsrichtung der Pylonen Öffnungen auf, die durch die gesamte Breite der Pylonen durchgehen. Diese Öffnungen können auch als Schlitze bezeichnet sein. Es ist ausreichend, wenn die Öffnungen oder Schlitze so bemessen sind, dass die Rotorblätter frei rotieren können. Die Rotationsachse der Propeller ist hierbei möglichst nahe entlang der Längsachse der Pylonen angeordnet. In nichtarretierter Stellung können die Hubrotoren somit den notwendigen vertikalen Schub erzeugen. Für den Reiseflug können die Propeller der Hubrotoren arretiert werden und sind durch die Anordnung der Hubrotoren in den Pylonen des Fluggeräts bei Arretierung in Längsrichtung der Pylonen aerodynamisch optimal angeordnet. Die Propeller der Hubrotoren erzeugen somit während des Reiseflugs einen möglichst geringen Luftwiderstand.

Bevorzugt ist für jeden der Propeller der Hubrotoren eine Öffnung in den Pylonen vorhanden. Um eine möglichst aerodynamisch optimale Oberfläche der Pylonen zu erreichen, weisen die Pylonen vorzugsweise nur im Bereich der Hubrotoren Öffnungen bzw. Schlitze für die Propeller auf. Alternativ kann die Öffnung in Längsrichtung des Pylonen größer ausgeführt sein, wobei ein oder mehrere Hubrotoren in Reihe oder übereinander innerhalb der Öffnung angeordnet sein können. Hierbei kann die Öffnung aus statischen Gründen abschnittsweise Stabilisierungsstreben oder Bereiche zwischen den einzelnen Hubrotoren aufweisen.

Bevorzugt weisen die Pylonen wenigstens eine Verschlussvorrichtung auf, die die Öffnungen bei arretierten Propellerplättern seitlich verschließen. Um den Luftwiderstand der Propeller in den Pylonen weiter zu reduzieren, können die Öffnungen der Pylonen verschlossen werden, so dass die Pylonen eine aerodynamisch optimale, nahezu glatte Oberfläche aufweisen. Um die Öffnungen im Bereich der Hubrotoren zu verschließen, wenn die Propellerblätter in arretierter Stellung sind, sind die Pylonen mit einer Verschlussvorrichtung versehen, die die Öffnungen verschließen können.

Bevorzugt besteht die Verschlussvorrichtung aus einem Segment oder mehreren Segmenten. Die Verschlussvorrichtung zum Verschließen der Öffnungen in den Pylonen kann für jede der Öffnungen aus einem Segment oder mehreren Segmenten bestehen. Die Verschlussvorrichtung kann hierbei nahezu jede beliebige Form aufweisen, die geeignet ist, die Öffnungen in den Pylonen möglichst aerodynamisch optimal zu verschließen. Vorzugsweise ist die Verschlussvorrichtung in der Form an die Kontur der Pylonen im Bereich der Öffnungen für die Propeller der Hubrotoren angepasst. Die Verschlussvorrichtung kann hierbei von der Seite, von Unten, von Oben, von der Außenseite oder von Innenseite der Pylonen die Öffnungen verschließen. Bei einer mehrteiligen Verschlussvorrichtung kann die Verschlussvorrichtung symmetrisch oder asymmetrisch ausgeführt sein. Die Verschlussvorrichtung kann in der Form einer Verschlussklappe aus einem Segment oder mehreren Segmenten, in der Form eines Rollladens oder einer Jalousie aus einem Segment oder mehreren Segmenten, oder jeder beliebigen anderen geeigneten Form ausgeführt sein.

Bevorzugt ist die Flügelstruktur an der Tragestruktur befestigt und die Flügelstruktur ist dazu ausgebildet, bei einer Horizontalbewegung des Fluggeräts eine Auftriebskraft für das Fluggerät zu erzeugen. Die Flügelstruktur weist hierfür wenigstens eine Tragfläche auf, die mit einem dynamischen Auftrieb erzeugenden Profil versehen ist.

Die Tragfläche bzw. die Tragflächen der Flügelstruktur sind dabei vorzugsweise derart dimensioniert, dass sie bei von dem Fluggerät zu erzielenden Reisefluggeschwindigkeiten alleine für einen ausreichenden Auftrieb für das Fluggerät sorgen können und somit bei Reisefluggeschwindigkeit auf einen durch die Hubrotoren erzeugten Auftrieb verzichtet werden kann.

Ein erfindungsgemäßes Fluggerät, das mit einer Kombination aus wenigstens vier Hubrotoren und wenigstens einem Schubantrieb sowie einer geeignet ausgebildeten Flügelstruktur versehen ist, kann sowohl die gewünschten guten Schwebeflugeigenschaften aufweisen als auch hohe Reisefluggeschwindigkeiten erreichen. Die Hubrotoren können dabei zum Beispiel beim Starten oder Landen oder im Schwebeflug, das heißt bei fehlender oder geringer Horizontalgeschwindigkeit des Fluggeräts, für einen nötigen Auftrieb sorgen. Unabhängig von den Hubrotoren kann der Schubantrieb das Fluggerät in Horizontalrichtung beschleunigen, wobei bei ausreichend hohen Horizontalgeschwindigkeiten ein durch die wenigstens eine Tragfläche der Flügelstruktur bewirkter dynamischer Auftrieb ausreichend hoch sein kann, um das Fluggerät zu tragen.

Die einzelnen Komponenten des vorgeschlagenen Fluggeräts können dabei verhältnismäßig einfach ausgebildet sein und gesteuert werden.

Bevorzugt sind die Pylonen über die mindestens eine Flügelstruktur mit dem zentralen Rumpf verbunden. In einer vorteilhaften Ausführungsform ist die Tragestruktur zusammen mit der Flügelstruktur als sogenannte Trimaranähnliche Tragestruktur mit zentralem Rumpf ausgebildet. In einer solchen Trimaranähnlichen Tragestruktur ist zumindest ein länglicher zentraler Rumpf vorgesehen, zu dem seitlich jeweils ein Nebenrumpf, ein sogenannter Pylon, angeordnet ist, d.h. mindestens ein zentraler Rumpf ist auf beiden Seiten jeweils von wenigstens einem Pylonen flankiert. Die Pylonen sind wenigstens über die Flügelstruktur und/oder zumindest einen Teil der Tragestruktur mit dem zentralen Rumpf verbunden. Ergänzend oder alternativ können die Pylonen über weitere Elemente der Tragestruktur mit dem zentralen Rumpf verbunden sein. Diese weiteren Elemente können hierbei auch zusätzlich für Auftrieb sorgen. Der zentrale Rumpf kann hierbei auch aus mehreren miteinander verbundenen zentral angeordneten Rümpfen bestehen, die seitliche nebeneinander angeordnet sind.

Vorzugsweise sind die Pylonen mindestens so weit von dem zentralen Rumpf des Fluggeräts beabstandet, dass die Propeller der Hubrotoren ausreichend Platz haben. Der Abstand zwischen den Pylonen und dem Rumpf beträgt somit mindestens die Länge eines Propellerblattes.

Die Pylonen können beispielsweise jeweils zwei der Hubrotoren aufweisen. In dem Pylon kann beispielsweise jeweils ein Motor für den Rotor aufgenommen sein. Der Pylon kann strömungsgünstig in Bezug auf eine von dem Rotor erzeugte Luftströmung und/oder in Bezug auf eine Luftströmung während des Reiseflugs ausgebildet sein. Gemäß einer weiteren Ausführungsform können auch jeweils zwei übereinander angeordnete Propeller pro Hubrotor verwendet werden. Vorzugsweise weisen die Propeller hierbei eine gegenläufige Rotationsrichtung auf. Die einzelnen Propeller können hierbei gemeinsam in einem gemeinsamen Schlitz oder getrennt in jeweils einem eigenen Schlitz angeordnet sein. Vorzugsweise ist die Rotationachse der beiden Propeller auf der gleichen Symmetrieachse angeordnet, d.h. die Propeller sind direkt übereinander angeordnet und überlappen einander. Aus statischen Gründen können Propeller nur einen bestimmten Maximaldurchmesser aufweisen. Um die Leistung der Hubrotoren steigern zu können die eben beschriebenen Doppelpropeller verwendet werden. Durch die gegenläufige Anordnung der Propeller beeinflussen die von dem ersten Propeller erzeugten Luftverwirbelungen den Auftrieb des zweiten Propellers positiv und bewirken dadurch eine Leistungssteigerung des Doppelpropellers gegenüber dem einzelnen Propeller. Der vertikale Abstand der beiden Propeller zueinander beträgt hierbei maximal 15% des Durchmessers der Propeller. Die Leistungssteigerung beträgt, beispielsweise bei einem Einzelpropeller mit 80% Wirkungsgrad eine Steigerung auf einen Wirkungsgrad von ca. 85% für den Doppelpropeller.

Insbesondere kann an der Tragfläche ein Leitwerk oder Ruder angeordnet sein. Mit Hilfe solcher Leitwerke bzw. Ruder kann der von der trimaranähnlichen Tragestruktur erzeugte Auftrieb z.B. beim Beschleunigen auf Reisefluggeschwindigkeit und damit einhergehend beim sukzessiven Drosseln der Hubrotoren geeignet beeinflusst werden.

Das vorgeschlagene Fluggerät soll eine Tragestruktur und eine Flügelstruktur aufweisen. Die Tragestruktur soll dabei für eine strukturelle Festigkeit des Fluggeräts sorgen, so dass sowohl die Flügelstruktur als auch die Hubrotoren stabil an dem Fluggerät befestigt werden können. Die Flügelstruktur soll mithilfe von geeignet ausgebildeten Tragflächen für einen dynamischen Auftrieb sorgen können, wenn das Fluggerät eine ausreichend hohe Reisefluggeschwindigkeit annimmt.

Es wird darauf hingewiesen, dass die Tatsache, dass für die Tragestruktur und die Flügelstruktur zwei separate Begriffe verwendet werden, nicht bedeutet, dass die von der Tragestruktur und der Flügelstruktur zu bewirkenden Funktionen zwingend von separaten realen Strukturen bewirkt werden müssen. Beispielsweise können Funktionen der Tragestruktur und Funktionen der Flügelstruktur von unterschiedlichen Strukturkomponenten des vorgeschlagenen Fluggeräts oder aber auch von gleichen Strukturkomponenten des Fluggeräts bewirkt werden. Als Beispiel kann ein Flügel eines Fluggeräts gleichzeitig als einen dynamischen Auftrieb bewirkende Tragfläche und somit als Teil einer Flügelstruktur wirken als auch andere Komponenten des Fluggeräts mechanisch miteinander verbinden und somit als Teil einer Tragestruktur wirken. Beispielsweise kann der Flügel eine äußere Haut aufweisen, die ein Profil einer dadurch gebildeten Tragfläche vorgibt und somit Teil der Flügelstruktur ist. Gleichzeitig kann der Flügel innen liegende Komponenten wie beispielsweise Verstrebungen aufweisen, die für eine mechanische Festigkeit sorgen und an denen beispielsweise die Flügelhaut befestigt ist, so dass diese als Tragestruktur dienen können.

Bevorzugt sind die Hubrotoren derart ausgebildet, dass eine Rotationsebene, in der Propellerblätter eines Hubrotors rotieren, in Relation zu einer von einem Motor angetriebenen Rotorachse des Hubrotors stationär ist. Mit anderen Worten können die Hubrotoren des Fluggeräts mechanisch einfach aufgebaut sein und beispielsweise ein einfacher Propeller direkt mit einer von einem Motor angetriebenen Achse gekoppelt sein. Es ist insbesondere nicht notwendig, Rotorblätter des Hubrotors mithilfe einer komplizierten Mechanik wie beispielsweise einer Taumelscheibe wie bei einem Hubschrauber mit einer motorgetriebenen Rotorachse zu verbinden. Insbesondere ist es nicht notwendig, einen Anstellwinkel oder Neigungswinkel einzelner Rotorblätter während einer Rotorumdrehung zu verändern, um auch auf diese Weise für einen Vortrieb des Fluggeräts, ein Rollen, Nicken oder ein Gieren des Fluggeräts zu sorgen. Stattdessen kann bei dem vorgeschlagenen Fluggerät ein Vortrieb mithilfe des zusätzlichen Schubantriebs bewirkt werden. Ein Rollen, Nicken bzw. ein Gieren des Fluggeräts kann durch ein Variieren der von den im Allgemeinen wenigstens vier Hubrotoren jeweils erzeugten Auftriebskräfte bewirkt werden

Bevorzugt sind Propellerblätter des Hubrotors starr mit der Rotorachse verbunden. Ein derart mit starren Blättern versehener Propeller weist keine beweglichen Teile auf. Er ist somit robust und erfordert beispielsweise keine Mechanik oder Steuerung, um eine variable Anordnung von Propellerblättern steuern zu können. Der Propeller kann insbesondere einstückig sein. Die von einem derart einfach aufgebauten Hubrotor erzeugte Auftriebskraft hängt hauptsächlich von der Rotationsgeschwindigkeit oder Drehzahl, mit der der Propeller betrieben wird, ab und kann somit einfach durch geeignetes Ansteuern des antreibenden Motors gesteuert werden.

Bevorzugt sind die Propellerblätter des Schubantriebs derart verschwenkbar mit der Rotorachse verbunden, dass eine Steigung der Propellerblätter variiert werden kann. Mit anderen Worten kann ein Winkel, den die Propellerblätter mit der Rotationsebene, in der die Propellerblätter rotieren, einnehmen, variiert werden. Ein solches Variieren der Steigung der Propellerblätter kann dabei vorzugsweise für alle Propellerblätter gemeinsam bewirkt werden. Insbesondere kann ein Variieren der Steigung der Propellerblätter unabhängig von einer aktuellen Position der rotierenden Propellerblätter vorgenommen werden, das heißt, die Propellerblätter werden nicht wie mit einer Taumelscheibe bei einem Hubschrauber während einer Umdrehung in ihrer Steigung variiert, sondern die Steigung der Propellerblätter bleibt während einer Umdrehung weitgehend konstant. Ein solches verhältnismäßig langsames Variieren der Steigung der Propellerblätter kann einfach und mit einer robusten Mechanik bewirkt werden.

Durch Variieren der Steigung der Propellerblätter kann der Schub des Schubantrieb und damit die von diesem bewirkte Vortriebskraft beeinflusst werden, ohne notwendigerweise eine Rotationsgeschwindigkeit, das heißt, eine Drehzahl, des Propellers verändern zu müssen. Ein solcher mit gemeinsam verschwenkbaren Propellerblättern versehener Schubpropeller wird auch als Verstellpropeller bezeichnet.

Der Schubantrieb ist beispielsweise als Zugantrieb oder als Druckantrieb ausgebildet. Genauer gesagt ist der Propeller des Schubantriebs-als Zugpropeller oder als Druckpropeller ausgebildet. Bei einem Zugpropeller zieht der Propeller das Fluggerät, d.h. der Propeller ist in Flugrichtung an der Vorderseite des Rumpfes, der Pylone, der Tragflächen oder an der Vorderseite des Höhenleitwerks angeordnet. Ein Druckpropeller ist in Flugrichtung an der Rückseite des Fluggeräts, d.h. beispielsweise an der Rückseite der Rumpfes, der Pylone, der Tragflächen oder dergleichen angeordnet.

Bevorzugt werden die Hubrotoren und der Schubantrieb durch unabhängig voneinander ansteuerbare Motoren angetrieben werden. Um das Fluggerät um seine Hochachse drehen zu lassen, das heißt, gieren zu lassen, ist es vorteilhaft das vorgeschlagene Fluggerät, ähnlich wie bei einem Quadcopter, mit wenigstens vier Hubrotoren auszustatten. Die vier Hubrotoren können dabei vorzugsweise unabhängig voneinander angesteuert werden. Da die Lage bzw. Neigung des Fluggeräts bereits durch den von lediglich drei Hubrotoren erzeugten Schub vorgegeben werden kann, eröffnet das Vorsehen eines zusätzlichen vierten Hubrotors die Möglichkeit, das Fluggerät auch gieren zu lassen. Das Fluggerät kann somit durch geeignetes Ansteuern der vier Hubrotoren in jede beliebige Lage und Flugrichtung gebracht werden. Ein solches Fluggerät mit vier oder mehr Hubrotoren kann zusätzlich zu guten Schwebeflugeigenschaften auch präzise und agil manövrierbar sein.

Aufgrund solcher separat voneinander ansteuerbarer Motoren kann bei dem Fluggerät ein durch die Hubrotoren erzeugter Auftrieb einerseits und ein von dem Schubantrieb erzeugter Vortrieb andererseits unabhängig voneinander kontrolliert werden. Insbesondere kann ein durch die Hubrotoren zu bewirkendes Rollen oder Gieren des Fluggeräts unabhängig von dem durch den Schubantrieb zu bewirkenden horizontalen Vortrieb gesteuert werden. Dabei können die Hubrotoren auch mit zunehmender. Reisefluggeschwindigkeit entsprechend für eine geringere Auftriebserzeugung angesteuert werden, um dem dann von der Tragfläche der Flügelstruktur bewirkten dynamischen Auftrieb Rechnung tragen zu können.

Bevorzugt wird jeder der Hubrotoren von einem Elektromotor angetrieben wird. Elektromotoren können bezüglich ihrer Drehzahl präzise und schnell gesteuert werden, so dass der von einem Hubrotor erzeugte Auftrieb schnell und exakt variiert werden kann, um bestimmte Flugbewegungen des Fluggeräts einzuleiten bzw. zu kontrollieren. Insbesondere bei einem Multicopter-ähnlichen Fluggerät kann die präzise und schnelle Steuerung der von den einzelnen Hubrotoren erzeugten Vertikalschubkräfte wichtig für sichere, stabile und gegebenenfalls agil manövrierbare Flugeigenschaften sein.

Bevorzugt wird der Schubantrieb durch einen Verbrennungsmotor angetrieben und der Verbrennungsmotor ist mit einem Generator zum Bereitstellen von elektrischer Energie an die Elektromotoren der Hubrotoren gekoppelt.

Bei einem solchen mit einer Art Hybridantrieb versehenen Fluggerät kann die in Horizontalrichtung wirkende Schubkraft durch den Verbrennungsmotor des Schubantriebs bewirkt werden. Der Verbrennungsmotor kann hierbei in Form eines Kolbenmotors öder eines Düsentriebwerks oder Ähnlichem realisiert sein. Treibstoff für einen solchen Verbrennungsmotor kann dabei in dem Fluggerät in ausreichenden Mengen mitgeführt werden, so dass der Schubantrieb über längere Zeiträume hin betrieben werden kann und das Fluggerät somit längere Zeit mit einer Reisefluggeschwindigkeit fliegen kann, um beispielsweise ein entfernt liegendes Ziel zu erreichen. Im Gegensatz zu dem Schubantrieb werden die Hubrotoren jedoch vorzugsweise von Elektromotoren angetrieben, um deren einfachere und präzisere Steuerbarkeit im Vergleich zu einem Verbrennungsmotor nutzen zu können während eines Schwebeflugs oder während des Startens oder Landens. Die elektrische Energie für diese Elektromotoren kann dabei von dem mit dem Verbrennungsmotor gekoppelten Generator bereitgestellt werden, wobei die elektrische Energie entweder direkt von dem Generator an die Elektromotoren geliefert werden kann oder zunächst in einem elektrischen Energiespeicher wie zum Beispiel einer Batterie gespeichert werden kann, um dann bei Bedarf von den Elektromotoren abgerufen zu werden. Der Schubantrieb kann beispielsweise über direkt oder indirekt von dem Generator mechanisch angetrieben werden.

Alternativ wird auch der Schubantrieb durch einen Elektromotor angetrieben und die elektrische Energie zum Betreiben der Elektromotoren wird durch eine Batterie oder einen Generator bereitgestellt. Die Batterie bzw. ein Akkumulator ist beispielsweise durch Solarzellen auf den Tragflächen und/oder dem Rumpf aufladbar. Der Generator kann beispielweise durch einen Verbrennungsmotor angetrieben werden und elektrische Energie zum Antrieb der Elektromotoren bereitstellen. Alternativ kann auch jede andere Art von Generator eingesetzt werden, der in der Lage ist elektrische Energie zum Betrieb der Elektromotoren bereitzustellen.

In den Zeichnungen beziehen sich im Allgemeinen gleiche Bezugszeichen auf die gleichen Teile über die verschiedenen Ansichten hinweg. Die Zeichnungen sind nichtnotwendigerweise maßstabsgetreu; Wert wird stattdessen im Allgemeinen auf die Veranschaulichung der Prinzipien der Erfindung gelegt. In der folgenden Beschreibung werden verschiedene Ausführungsformen der Erfindung beschrieben unter Bezugnahme auf die folgenden Zeichnungen, in denen:
- FIG. 1: eine Ausführungsform des Fluggeräts zeigt;
- FIG. 2: eine weitere Ausführungsform des Fluggeräts zeigt;
- FIG. 3: eine Seitenansicht des Fluggeräts der Ausführungsform aus Figur 2 zeigt;
- FIG. 4: eine Frontansicht des Fluggeräts der Ausführungsform aus Figur 2 zeigt;
- FIG. 5: eine Schnittdarstellung des Pylonen mit Propeller in nichtarretierter Stellung zeigt; und
- FIG. 6: eine Schnittdarstellung des Pylonen mit Propeller in arretierter Stellung zeigt.

Die folgende detaillierte Beschreibung nimmt Bezug auf die beigefügten Zeichnungen, welche zur Erläuterung spezifische Details und Ausführungsformen zeigen, in welchem die Erfindung praktiziert werden kann.

Das Wort "beispielhaft" wird hierin verwendet mit der Bedeutung "als ein Beispiel, Fall oder Veranschaulichung dienend". Jede Ausführungsform oder Ausgestaltung, die hierin als "beispielhaft" beschrieben ist, ist nicht notwendigerweise als bevorzugt oder vorteilhaft gegenüber anderen Ausführungsformen oder Ausgestaltungen auszulegen.

In der folgenden ausführlichen Beschreibung wird auf die beigefügten Zeichnungen Bezug genommen, die Teil dieser bilden und in denen zur Veranschaulichung spezifische Ausführungsformen gezeigt sind, in denen die Erfindung ausgeübt werden kann. In dieser Hinsicht wird Richtungsterminologie wie etwa "oben", "unten", "vorne", "hinten", "vorderes", "hinteres", usw. mit Bezug auf die Orientierung der beschriebenen Figur(en) verwendet. Da Komponenten von Ausführungsformen in einer Anzahl verschiedener Orientierungen positioniert werden können, dient die Richtungsterminologie zur Veranschaulichung und ist auf keinerlei Weise einschränkend. Es versteht sich, dass andere Ausführungsformen benutzt und strukturelle oder logische Änderungen vorgenommen werden können, ohne von dem Schutzumfang der vorliegenden Erfindung abzuweichen. Es versteht sich, dass die Merkmale der hierin beschriebenen verschiedenen beispielhaften Ausführungsformen miteinander kombiniert werden können, sofern nicht spezifisch anders angegeben. Die folgende ausführliche Beschreibung ist deshalb nicht in einschränkendem Sinne aufzufassen, und der Schutzumfang der vorliegenden Erfindung wird durch die angefügten Ansprüche definiert.

Im Rahmen dieser Beschreibung werden die Begriffe "verbunden", "angeschlossen" sowie "gekoppelt" verwendet zum Beschreiben sowohl einer direkten als auch einer indirekten Verbindung, eines direkten oder indirekten Anschlusses sowie einer direkten oder indirekten Kopplung. In den Figuren werden identische oder ähnliche Elemente mit identischen Bezugszeichen versehen, soweit dies zweckmäßig ist.

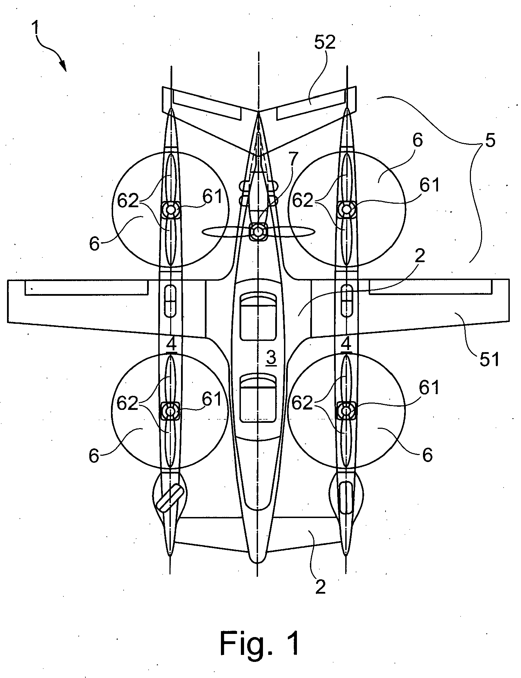

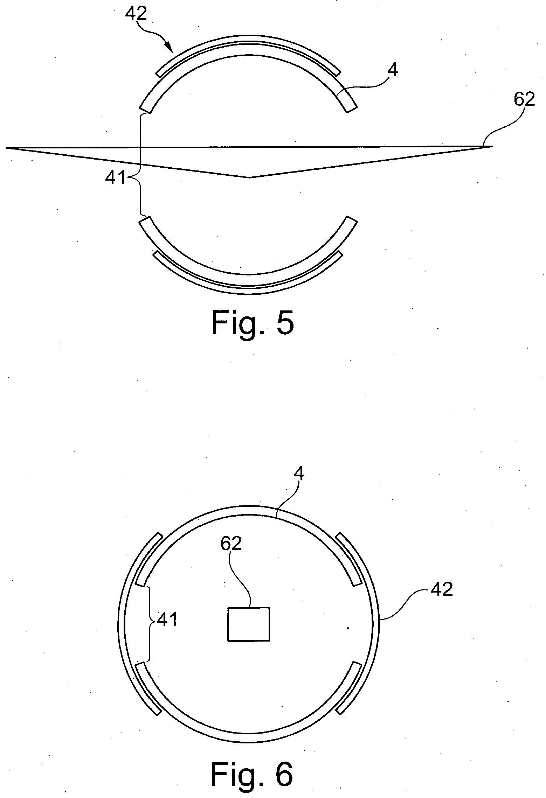

Figur 1 zeigt eine erfindungsgemäße Ausführungsform des Fluggeräts 1. Das Fluggerät 1 weist eine Tragestruktur 2. Die Tragestruktur 2 umfasst einen zentralen Rumpf 3 und zwei jeweils seitlich von dem Rumpf 3 beabstandet angeordnete Pylone 4. Das Fluggerät 1 weist weiter eine Flügelstruktur 5 auf, die in der dargestellten Ausführungsform des Fluggeräts 1 aus einem Haupttrageflügel 51 und einem Höhenruder 52 besteht. Das Fluggerät 1 weist in der dargestellten Ausführungsform Hubrotoren 6 und einen Schubantrieb 7 auf. Jeder der Hubrotoren 6 ist an der Tragestruktur 2 des Fluggeräts 1 befestigt. Die Hubrotoren 6 weisen jeweils einen Propeller 61 mit zwei Propellerblättern 62 auf. Die Hubrotoren 6 sind dazu ausgebildet, durch Rotieren des Propellers 61 eine in Vertikalrichtung wirkende Auftriebskraft für das Fluggerät 1 zu erzeugen. Der Schubantrieb 7 des Fluggeräts 1 ist dazu ausgebildet, eine in Horizontalrichtung wirkende Schubkraft auf die Tragestruktur 2 zu erzeugen. Die Pylone 4 des Fluggeräts 1 weisen jeweils zwei Hubrotoren 6 auf, wobei die Hubrotoren 6 dazu ausgebildet sind, jeweilige Propellerblätter 62 des Hubrotors 6 in einer Position relativ zu dem Pylonen 4 zu arretieren. Die Propellerblätter 62 der Hubrotoren 6 ragen in arretierter Stellung nicht über die Außenabmessungen des Pylonen 4 hinaus. Die Darstellung der Propeller 61 in arretierter und in nichtarretierter Stellung ist im Detail in den Figuren 5 und 6 dargestellt.

In der in Figur 1 dargestellten Ausführungsform sind die Rotorblätter 62 in arretierter Stellung dargestellt, bzw. in der der arretierten Stellung entsprechenden Position dargestellt. Der Kreis, der von den rotierenden Rotorblättern 62 beschrieben wird, ist in der Figur 1 als Kreis angedeutet. Hierbei ist zu erkennen, dass der Abstand der Pylonen 4 zum zentralen Rumpf 3 des Fluggeräts 1 mindestens dem Radius des Kreises, d.h. der Länge des Rotorblattes 62 entspricht.

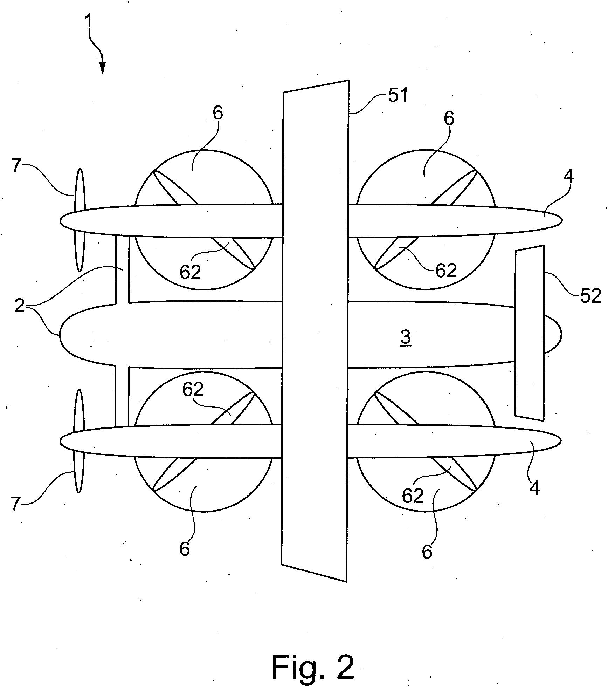

Figur 2 zeigt eine weitere Ausführungsform des Fluggeräts 1. Das in Figur 2 dargestellte Fluggerät 1 unterscheidet sich von dem in Figur 1 dargestellten Fluggerät 1 unter anderem dadurch, dass das Fluggerät 1 in Figur 2 zwei Schubantriebe 7 aufweist, die an der Stirnseite der Pylonen 4 angeordnet sind. Im Weiteren entspricht der Aufbau des Fluggeräts 1 in Figur 2 weitgehend dem Fluggerät 1 aus Figur 1. Das Fluggerät 1 weist eine Tragestruktur 2 auf, die einen zentralen Rumpf 3 und zwei jeweils seitlich von dem Rumpf 3 beabstandet angeordnete Pylone 4 aufweist. Das Fluggerät 1 weist weiter eine Flügelstruktur 5 auf, die in der dargestellten Ausführungsform des Fluggeräts 1 aus einem Haupttrageflügel 51 und einem Höhenruder 52 besteht. Das Fluggerät 1 weist in der dargestellten Ausführungsform vier Hubrotoren 6 und zwei Schubantriebe 7 auf. Jeder der Hubrotoren 6 ist an der Tragestruktur 2 des Fluggeräts 1 befestigt. Die Hubrotoren 6 weisen jeweils einen Propeller 61 mit zwei Propellerblättern 62 auf. Die Pylone 4 des Fluggeräts 1 weisen jeweils zwei Hubrotoren 6 auf.

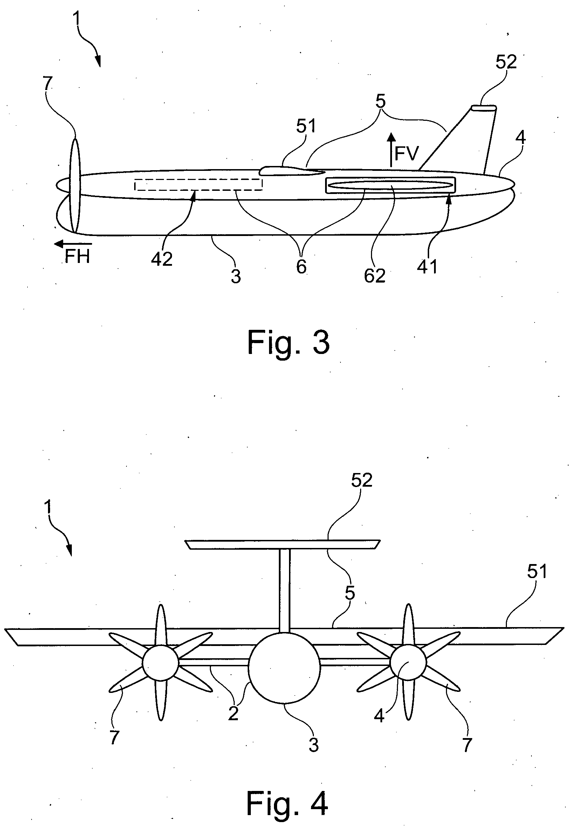

Figur 3 zeigt eine Seitenansicht des Fluggeräts der Ausführungsform aus Figur 2. Bei dem in Figur 3 dargestellten Fluggerät 1 sind die beiden Hubrotoren 6 in arretierter Stellung gezeigt. Die Öffnung 41 im Pylonen 4 ist bei dem in Flugrichtung vorderen Hubrotor 6 durch eine Verschlussvorrichtung 42, beispielsweise eine Verschlussklappe verschlossen. Die Öffnung 41 des in Flugrichtung hinteren Hubrotors 6 ist offen. Die Propellerblätter 62 der Hubrotoren 6 sind in arretierter Stellung innerhalb der Pylonen 4 angeordnet und ragen nicht über die Abmessungen des Pylonen 4 hinaus. Durch eine Anordnung der Propellerblätter 62 bei arretierter Stellung innerhalb des Pylonen 4 wird der Luftwiderstand der Propellerblätter 62 reduziert. Durch die Verschlussvorrichtung 42 kann der Luftwiderstand weiter reduziert werden, indem die Verschlussvorrichtung 42 den Pylonen 4 aerodynamisch optimal nach außen abschließen. Durch die Verschlussvorrichtung 42 weisen die Pylonen 4 bei arretierten Hubrotoren 6 eine aerodynamisch optimale Form auf. Die Verschlussvorrichtung 42 kann einteilig oder mehrteilig ausgebildet sein. Die Verschlussvorrichtung 42 kann bei offener Öffnung 41 ganz oder teilweise innerhalb der Pylonen 4 oder ganz oder teilweise außerhalb der Pylonen 4 angeordnet sein. Eine Ausführungsform der Verschlussvorrichtung 42 ist in den Figuren 5 und 6 im Detail dargestellt.

Figur 4 zeigt eine Frontansicht der Ausführungsform des Fluggeräts 1 aus Figur 2. In der in Figur 4 dargestellten Ausführungsform sind die Propeller des Schubantriebs 7 als sechsblättriger Propeller dargestellt. Der Schubantrieb 7 kann jedoch auch je nach Bedarf mit einer anderen Form von Propeller ausgestattet sein.

Figur 5 zeigt eine Schnittdarstellung des Pylonen 4 mit Propeller in nichtarretierter Stellung. Die Propellerblätter 62 des Propellers sind in der in Figur 5 dargestellten Ausführungsform in nicht arretierter Stellung, d.h. im normalen Hubbetrieb. Der Pylon 4 weist in der dargestellten Form eine Öffnung 41 auf beiden Seiten des Pylonen 4 auf. Der Propeller kann in der Öffnung 41 des Pylonen 4 frei rotieren. Die Verschlussvorrichtung 42 zum Verschließen der Öffnungen 41 ist in der dargestellten Ausführungsform an die Außenkontur des Pylonen 4 angepasst und weist im Profil die Form von gewölbt geformten Schalen auf. Die Verschlussvorrichtung 42 besteht in der dargestellten Ausführungsform aus einteiligen Schalensegmenten. Die Verschlussvorrichtung 42 kann nahezu jede beliebige Form aufweisen und pro Öffnungsseite ein oder mehrteilig aufgebaut sein. In der dargestellten Ausführungsform ist die Verschlussvorrichtung 42 im geöffneten Zustand auf der Außenseite des Pylonen 4 angeordnet. Bei einer alternativen, nicht dargestellten Ausführungsform kann die Verschlussvorrichtung 42 jedoch im geöffneten Zustand auch ganz oder teilweise innerhalb des Pylonen 4 angeordnet sein.

Figur 6 zeigt eine Schnittdarstellung des Pylonen 4 mit Propeller in arretierter Stellung. Die Propellerblätter 62 des Propellers sind in der in Figur 6 dargestellten Ausführungsform in arretierter Stellung angeordnet. Die Propellerblätter 62 sind in arretierter Stellung in Längsrichtung des Pylonen 4 angeordnet. Die Propellerblätter 62 des Propellers ragen in arretierter Stellung nicht über die Außenabmessungen des Pylonen 4 hinaus. Die Öffnungen 41, in den der Propeller im Betriebszustand rotieren kann, ist bei arretierter Stellung der Propellerblätter 62 durch die Verschlussvorrichtung 42 verschließbar. Die Segmentschalen der Verschlussvorrichtung 42 sind in der in Figur 6 dargestellten Ausführungsform über den Öffnungen 41 angeordnet. Die Verschlussvorrichtung 42 verschließt die Öffnungen 41 nach außen ab und bildt zusammen mit der Außenform des Pylonen 4 eine möglichst aerodynamisch optimale Außenform. In der dargestellten Ausführungsform überragt die Verschlussvorrichtung 42 die Öffnungen 41 am oberen und unteren Rand der Öffnung. Alternativ kann die Verschlussvorrichtung 42 die Öffnung 41 auch bündig abschließen und keinen oder nur einen minimalen Überlapp mit den Kanten der Öffnung 41 auf der Innenseite und/oder der Außenseite des Pylonen 4 aufweisen. In der in den Figuren 5 und 6 dargestellten Ausführungsform weist der Pylon 4 im Schnitt eine nahezu kreisrunde Form auf. Der Pylon 4 kann nahezu jede beliebige Form aufweisen, die aerodynamisch geeignet ist und die die Propellerblätter der Hubrotoren in arretierter Stellung vorzugsweise vollständig aufnehmen kann.

Obwohl die Erfindung vor allem unter Bezugnahme auf bestimmte Ausführungsformen gezeigt und beschrieben worden ist, sollte von denjenigen, die mit dem Fachgebiet vertraut sind, verstanden werden, dass zahlreiche Änderungen bezüglich Ausgestaltung und Details daran vorgenommen werden können, ohne vom Wesen und Bereich der Erfindung, wie durch die angefügten Ansprüche definiert, abzuweichen. Der Bereich der Erfindung wird somit durch die angefügten Ansprüche bestimmt, und es ist daher beabsichtigt, dass sämtliche Änderungen, welche unter den Wortsinn oder den Äquivalenzbereich der Ansprüche fallen, umfasst werden.

### Bezugszeichenliste

- 1: Fluggerät
- 2: Tragestruktur
- 3: Rumpf
- 4: Pylon
- 41: Öffnung
- 42: Verschlussvorrichtung
- 5: Flügelstruktur
- 51: Haupttrageflügel
- 52: Höhenruder
- 6: Hubrotor
- 61: Propeller
- 62: Propellerblätter
- 7: Schubantrieb
- FV: Auftriebskraft
- FH: Schubkraft

## Patentansprüche

1. Fluggerät (1), aufweisend:
eine Tragestruktur (2);
wobei die Tragestruktur (2) wenigstens einen zentralen Rumpf (3) und zwei jeweils seitlich von dem Rumpf (3) beabstandet angeordnete Pylone (4) aufweist;
eine Flügelstruktur (5);
wenigstens vier Hubrotoren (6);
wenigstens einen Schubantrieb (7);
wobei jeder der Hubrotoren (6) an der Tragestruktur (2) befestigt ist, einen Propeller (61) mit zwei Propellerblättern (62) aufweist und dazu ausgebildet ist, durch Rotieren des Propellers (61) eine in Vertikalrichtung wirkende Auftriebskraft (FV) für das Fluggerät (1) zu erzeugen;
wobei der Schubantrieb (7) dazu ausgebildet ist, eine in Horizontalrichtung wirkende Schubkraft (FH) auf die Tragestruktur (2) zu erzeugen;
wobei die Pylone (4) jeweils mindestens zwei Hubrotoren (6) aufweisen;
wobei die Hubrotoren (6) dazu ausgebildet sind, jeweilige Propellerblätter (62) eines Hubrotors (6) in einer Position relativ zu dem Pylonen (4) zu arretieren; und
wobei die Propellerblätter (62) eines Hubrotors (6) in arretierter Stellung nicht über die Außenabmessungen des Pylonen (4) hinausragen;
wobei die Propeller (61) der Hubrotoren (6) in den Pylonen (4) derart angeordnet sind, dass sie wenigstens von zwei gegenüberliegenden Seiten durch den Pylon (4) umschlossen sind.

2. Fluggerät nach einem der vorherstehenden Ansprüche,
wobei die Pylone (4) quer zur Ausdehnungsrichtung des Pylonen (4) beidseitig offene Öffnungen (41) aufweisen in denen die Propeller (61) der Hubrotoren (6) integriert sind.

3. Fluggerät nach Anspruch 2,
wobei die Öffnungen (41) quer zur Ausdehnungsrichtung der Pylone (4) eine durchgehende Öffnung (41) durch den Pylon (4) bilden.

4. Fluggerät nach einem der Ansprüche 2 oder 3,
wobei für jeden der Propeller (61) der Hubrotoren (6) eine Öffnung (41) in den Pylonen (4) vorhanden ist.

5. Fluggerät nach einem der Ansprüche 3 bis 4,
wobei die Pylone (4) wenigstens eine Verschlussvorrichtung (42) aufweisen, die die Öffnungen (41) bei arretierten Propellerplättern (62) seitlich verschließen.

6. Fluggerät nach Anspruch 5,
wobei die Verschlussvorrichtung (42) aus einem Segment oder mehreren Segmenten bestehen.

7. Fluggerät nach einem der vorherstehenden Ansprüche,
wobei die Flügelstruktur (5) an der Tragestruktur (2) befestigt ist und wobei die Flügelstruktur (5) dazu ausgebildet ist, bei einer Horizontalbewegung des Fluggeräts (1) eine Auftriebskraft für das Fluggerät (1) zu erzeugen und hierfür wenigstens eine Tragfläche (51) aufweist, die mit einem dynamischen Auftrieb erzeugenden Profil versehen ist.

8. Fluggerät nach einem der vorherstehenden Ansprüche,
wobei die Pylonen (4) über die mindestens eine Flügelstruktur (5) mit dem zentralen Rumpf (3) verbunden sind.

9. Fluggerät nach einem der vorherstehenden Ansprüche,
wobei die Hubrotoren (6) derart ausgebildet sind, dass eine Rotationsebene, in der Propellerblätter (62) eines Hubrotors (6) rotieren, in Relation zu einer von einem Motor angetriebenen Rotorachse des Hubrotors (6) stationär ist.

10. Fluggerät nach Anspruch 9,
wobei Propellerblätter (62) des Hubrotors (6) starr mit der Rotorachse verbunden sind.

11. Fluggerät nach einem der vorherstehenden Ansprüche,
wobei Propellerblätter des Schubantriebs (7) derart verschwenkbar mit deren Rotorachse verbunden sind, dass eine Steigung der Propellerblätter variiert werden kann

12. Fluggerät nach einem der vorherstehenden Ansprüche,
wobei die Hubrotoren (6) und der Schubantrieb (7) durch unabhängig voneinander ansteuerbare Motoren angetrieben werden.

13. Fluggerät nach einem der vorherstehenden Ansprüche,
wobei jeder der Hubrotoren (6) von einem Elektromotor angetrieben wird.

14. Fluggerät nach Anspruch 13, wobei der Schubantrieb (7) durch einen Verbrennungsmotor angetrieben wird und der Verbrennungsmotor mit einem Generator zum Bereitstellen von elektrischer Energie an die Elektromotoren der Hubrotoren (6) gekoppelt ist; oder
wobei der Schubantrieb (7) durch einen Elektromotor angetrieben wird, und die elektrische Energie zum Betreiben der Elektromotoren durch eine Batterie oder einen Generator bereitgestellt wird.

## Claims

1. Aircraft (1), having:
a load-bearing structure (2);
wherein the load-bearing structure (2) has at least one central fuselage (3) and two pylons (4), each arranged spaced apart laterally from the fuselage (3) ;
a wing structure (5);
at least four lifting rotors (6);
at least one thrust drive (7);
wherein each of the lifting rotors (6) is secured to the load-bearing structure (2), has a propeller (61) with two propeller blades (62) and is designed, by rotation of the propeller (61), to generate a lift force (FV), acting in the vertical direction, for the aircraft (1);
wherein the thrust drive (7) is designed to generate a thrust force (FH), acting in the horizontal direction, on the load-bearing structure (2) ;
wherein the pylons (4) each have at least two lifting rotors (6);
wherein the lifting rotors (6) are designed to arrest respective propeller blades (62) of a lifting rotor (6) in a position relative to the pylons (4); and
wherein the propeller blades (62) of a lifting rotor (6), in the arrested position, do not project beyond the outer dimensions of the pylon (4);
wherein the propellers (61) of the lifting rotors (6) are arranged in the pylons (4) such that they are enclosed by the pylon (4) at least on two opposite sides.

2. Aircraft according to one of the preceding claims, wherein the pylons (4) have openings (41) which are open on both sides transversely to the direction of extent of the pylon (4) and in which the propellers (61) of the lifting rotors (6) are integrated.

3. Aircraft according to Claim 2,
wherein the openings (41) transverse to the direction of extent of the pylons (4) form a continuous opening (41) through the pylon (4).

4. Aircraft according to one of Claims 2 and 3,
wherein for each of the propellers (61) of the lifting rotors (6) there is an opening (41) in the pylons (4).

5. Aircraft according to one of Claims 3 to 4,
wherein the pylons (4) have at least one closure device (42) which close the openings (41) laterally when the propeller blades (62) are arrested.

6. Aircraft according to Claim 5,
wherein the closure device (42) consists of one segment or multiple segments.

7. Aircraft according to one of the preceding claims, wherein the wing structure (5) is secured to the load-bearing structure (2), and wherein the wing structure (5) is designed to generate, during horizontal movement of the aircraft (1), a lift force for the aircraft (1), and to that end has at least one lifting surface (51) that is provided with a profile which generates dynamic lift.

8. Aircraft according to one of the preceding claims, wherein the pylons (4) are connected to the central fuselage (3) via the at least one wing structure (5) .

9. Aircraft according to one of the preceding claims, wherein the lifting rotors (6) are designed such that a plane of rotation, in which the propeller blades (62) of a lifting rotor (6) rotate, is static in relation to a rotor shaft, driven by a motor, of the lifting rotor (6).

10. Aircraft according to Claim 9,
wherein propeller blades (62) of the lifting rotor (6) are rigidly connected to the rotor shaft.

11. Aircraft according to one of the preceding claims, wherein propeller blades of the thrust drive (7) are connected in a pivotable manner to their rotor shaft such that it is possible to vary a pitch of the propeller blades.

12. Aircraft according to one of the preceding claims, wherein the lifting rotors (6) and the thrust drive (7) are driven by motors that can be controlled independently of one another.

13. Aircraft according to one of the preceding claims, wherein each of the lifting rotors (6) is driven by an electric motor.

14. Aircraft according to Claim 13,
wherein the thrust drive (7) is driven by an internal combustion engine, and the internal combustion engine is coupled to a generator for providing electrical energy to the electric motors of the lifting rotors (6); or
wherein the thrust drive (7) is driven by an electric motor, and the electrical energy for operating the electric motors is provided by a battery or a generator.

## Revendications

1. Aéronef (1), présentant:
une structure de support (2);
dans lequel la structure de support (2) présente au moins un fuselage central (3) et deux pylônes (4) disposés à distance respectivement sur le côté du fuselage (3) ;
une structure d'ailes (5);
au moins quatre rotors de sustentation (6);
au moins un entraînement de poussée (7);
dans lequel chacun des rotors de sustentation (6) est fixé à la structure de support (2), présente une hélice (61) avec deux pales d'hélice (62) et est configuré pour produire par rotation de l'hélice (61) une force de sustentation (FV) agissant en direction verticale pour l'aéronef (1);
dans lequel l'entraînement de poussée (7) est configuré pour produire une force de poussée (FH) agissant en direction horizontale sur la structure de support (2);
dans lequel les pylônes (4) présentent respectivement au moins deux rotors de sustentation (6);
dans lequel les rotors de sustentation (6) sont configurés pour arrêter des pales d'hélice respectives (62) d'un rotor de sustentation (6) dans une position par rapport au pylône (4); et
dans lequel les pales d'hélice (62) d'un rotor de sustentation (6) en position arrêtée ne sortent pas des dimensions extérieures du pylône (4);
dans lequel les hélices (61) des rotors de sustentation (6) sont disposées dans les pylônes (4) de telle manière qu'elles soient entourées au moins sur deux côtés opposés par le pylône (4).

2. Aéronef selon la revendication précédente, dans lequel les pylônes (4) présentent des ouvertures (41) ouvertes de part et d'autre transversalement à la direction d'extension du pylône (4), dans lesquelles les hélices (61) des rotors de sustentation (6) sont intégrées.

3. Aéronef selon la revendication 2, dans lequel les ouvertures (41) forment transversalement à la direction d'extension des pylônes (4) une ouverture (41) percée à travers le pylône (4).

4. Aéronef selon une des revendications 2 ou 3, dans lequel il se trouve une ouverture (41) dans les pylônes (4) pour chacune des hélices (61) des rotors de sustentation (6).

5. Aéronef selon une des revendications 3 à 4, dans lequel les pylônes (4) présentent au moins un dispositif de fermeture (42), qui ferment latéralement les ouvertures (41) lorsque les pales d'hélice (62) sont arrêtées.

6. Aéronef selon la revendication 5, dans lequel le dispositif de fermeture (42) se compose d'un segment ou de plusieurs segments.

7. Aéronef selon l'une quelconque des revendications précédentes, dans lequel la structure d'ailes (5) est fixée à la structure de support (2) et dans lequel la structure d'ailes (5) est réalisée de façon à produire, lors d'un déplacement horizontal de l'aéronef (1), une force de sustentation pour l'aéronef (1) et présente à cet effet au moins une face portante (51), qui est dotée d'un profil produisant une sustentation dynamique.

8. Aéronef selon l'une quelconque des revendications précédentes, dans lequel les pylônes (4) sont reliés au fuselage central (3) au moyen de ladite au moins une structure d'ailes (5).

9. Aéronef selon l'une quelconque des revendications précédentes, dans lequel les rotors de sustentation (6) sont réalisés de telle manière qu'un plan de rotation, dans lequel des pales d'hélice (62) d'un rotor de sustentation (6) tournent, soit stationnaire par rapport à un axe de rotor du rotor de sustentation (6) entraîné par un moteur.

10. Aéronef selon la revendication 9, dans lequel des pales d'hélice (62) du rotor de sustentation (6) sont reliées rigidement à l'axe de rotor.

11. Aéronef selon l'une quelconque des revendications précédentes, dans lequel des pales d'hélice de l'entraînement de poussée (7) sont reliées de façon pivotante à leur axe de rotation, de telle manière qu'un pas des pales d'hélice puisse être modifié.

12. Aéronef selon l'une quelconque des revendications précédentes, dans lequel les rotors de sustentation (6) et l'entraînement de poussée (7) sont entraînés par des moteurs pouvant être commandés indépendamment l'un de l'autre.

13. Aéronef selon l'une quelconque des revendications précédentes, dans lequel chacun des rotors de sustentation (6) est entraîné par un moteur électrique.

14. Aéronef selon la revendication 13, dans lequel l'entraînement de poussée (7) est entraîné par un moteur à combustion interne et le moteur à combustion interne est couplé à un générateur destiné à fournir de l'énergie électrique aux moteurs électriques des rotors de sustentation (6); ou
dans lequel l'entraînement de poussée (7) est entraîné par un moteur électrique, et l'énergie électrique pour l'entraînement des moteurs électriques est fournie par une batterie ou un générateur.
